# EUROPÄISCHE PATENTSCHRIFT

(11) **EP 3 691 056 B1**
(45) Veröffentlichungstag und Bekanntmachung des Hinweises auf die Patenterteilung: **03.04.2024**
(21) Anmeldenummer: 19155089.6
(22) Anmeldetag: 01.02.2019
(51) Int. Cl.: H01R 43/28, H01R 43/052

(54) **GREIFEREINHEIT ZUM GREIFEN UND HANDHABEN VON KABELENDEN ZWEIER KABEL, BESTÜCKUNGSSTATION MIT DER GREIFEREINHEIT UND VERFAHREN ZUR BESTÜCKUNG VON STECKERGEHÄUSEN**
GRIPPER UNIT FOR GRIPPING AND HANDLING CABLE ENDS OF TWO CABLES, MOUNTING STATION WITH THE GRIPPER UNIT AND METHOD FOR THE MOUNTING OF CONNECTOR HOUSING
UNITÉ DE PRÉHENSION PERMETTANT D'APPRÉHENDER ET DE MANIPULER LES EXTRÉMITÉS DE CÂBLE DE DEUX CÂBLES, STATION DE MONTAGE DOTÉE DE L'UNITÉ DE PRÉHENSION ET PROCÉDÉ DE MONTAGE DES BOÎTIERS DE LA PRISE

(43) Veröffentlichungstag der Anmeldung: 05.08.2020
(73) Patentinhaber: KOMAX HOLDING AG, 6036 Dierikon (CH)
(72) Erfinder: BUSSMANN, Thomas, 6424 Lauerz (CH); SEEHOLZER, Vital, 6318 Walchwil (CH)
(74) Vertreter: Inventio AG

(56) Entgegenhaltungen:
- DE-A1- 4 303 122
- FR-A1- 2 691 296
- US-A- 2 674 772
- US-A1- 2004 094 674

## Beschreibung

Die Erfindung betrifft eine Greifereinheit zum Greifen und Handhaben von Kabelenden zweier Kabel eines Kabelstrangs gemäss dem Oberbegriff von Anspruch 1. Weiterhin betrifft die Erfindung eine Bestückungsstation zum Bestücken von Steckergehäusen mit Kabelenden mittels einer solchen Greifereinheit sowie ein Verfahren zur Bestückung von Steckergehäusen.

Kabelbäume, wie sie beispielsweise in Automobilen oder Flugzeugen eingesetzt werden, bestehen aus mehreren Kabeln, die an ihren konfektionierten Kabelenden mit Steckergehäusen versehen werden. Hierzu werden die zuvor konfektionierten, d.h. abgelängten, abisolierten und mit Kontaktteilen (z.B. Crimpkontakten) versehenen Kabelenden in Kammern oder Aufnahmen der Steckergehäuse eingeführt. In der Regel liegen die Kabel eines Kabelbaums mit den zu bestückenden Kabelenden einzeln vor und werden insoweit auch einzeln mit entsprechenden maschinellen Vorrichtungen in die Kammern der Steckergehäuse eingeführt. In zunehmendem Masse kommen bei Kabelbäumen neuerdings auch Kabelstränge aus mehreren Kabeln zum Einsatz vornehmlich verdrillte Kabel, für die ebenfalls das Bedürfnis besteht, die freien, insbesondere entdrillten und gegebenenfalls gestreckten Kabelenden des Kabelstrangs zu bestücken. Verdrillte Kabel zeichnen sich durch besonders gute Übertragungsqualitäten von Signalen aus. Neben verdrillten Kabeln können aber auch unverdrillte Kabel von Kabelsträngen oder andere Mehrkabelsysteme zum Einsatz kommen, bei denen die Kabel lediglich nebeneinander angeordnet und in einem Verbund zusammengefasst sind. Ganz allgemein besteht ein Bedürfnis, Kabelstränge aus wenigstens zwei Kabeln, insbesondere verdrillten Kabeln, mit entsprechenden maschinellen Vorrichtungen, die dem Fachmann als Kabelbestückungstationen bekannt sind, kabelendseitig bestücken zu können.

Die automatische Bestückung von Steckergehäusen mit verdrillten Kabeln ist anspruchsvoll. Eine besonders wichtige Komponente der Bearbeitungsstation ist die Greifereinheit, die die Kabelenden der Kabel erfasst, die Kabelenden zu den Steckergehäusen bringt und in diese einführt. Eine Zielsetzung ist, dass der Längenbereich der Kabelenden, welcher nicht verdrillt ist, möglichst klein gehalten werden soll. Dies bedingt, dass beide Enden annähernd gleichzeitig in das Steckergehäuse gebracht werden müssen.

Eine gattungsmässig vergleichbare Greifereinheit zum Greifen und Handhaben von Kabelenden zweier Kabel eines Kabelstrangs für eine Bestückungsstation zum Bestücken von Steckergehäusen mit Kabelenden ist beispielsweise aus der EP 3 301 769 A1 bekannt geworden. Die Greifereinheit besteht aus zwei hintereinander angeordneten Kabelgreifern. Jeder Kabelgreifer weist jeweils zwei zwischen einer Offenstellung und einer Schliessstellung bewegbare Greiferbacken auf. Hierbei werden die einzelnen Enden des verdrillten Kabels von jeweils einem Kabelgreifer gehalten. Die beiden Greifer sind in Kabelrichtung hintereinander positioniert. Das jeweils andere Einzelkabelende, welches nicht vom Kabelgreifer gehalten wird, läuft durch einen leicht vergrösserten Führungskanal des Kabelgreifers. Um das verdrillte Kabel in das Steckergehäuse einzubringen, wird ein Einzelkabelende um einige Millimeter in Kabelrichtung gegenüber dem anderen nach vorne geschoben. Die Spitzen der beiden Kontaktteile liegen somit nicht mehr auf gleicher Höhe in Kabelrichtung. Dies ermöglicht es, nacheinander die Kontaktteile auf die entsprechenden Einlauföffnungen zu richten und einzuführen. Die Greiferbacken der Kabelgreifer sind spezifisch auf vorbestimmte Kabeldurchmesser und einen fixen Abstand zwischen den beiden Kabeln ausgelegt. Weiter erfordert diese Lösung vergleichsweise lange unverdrillte bzw. entdrillte Längen der Kabelenden der Kabel des verdrillten Kabelstrangs.

Die FR 2 691 296 A1 zeigt eine Greifereinheit zum Greifen und Handhaben von Kabelenden von einzelnen Kabeln.

US 2 674 772 A offenbart den Oberbegriff des Anspruchs 1.

Es ist deshalb eine Aufgabe der vorliegenden Erfindung, die Nachteile des Bekannten zu vermeiden und insbesondere eine verbesserte Greifereinheit zum Greifen und Handhaben von Kabelenden zweier Kabel eines Kabelstrangs zu schaffen. Die Greifereinheit selbst und die mit der Greifereinheit ausgerüstete Bestückungsstation soll eine hohe Variabilität zulassen und sich durch einen breiten Anwendungsbereich auszeichnen.

Diese Aufgabe wird erfindungsgemäss mit einer Greifereinheit mit den Merkmalen des Anspruchs 1 gelöst. Die Greifereinheit dient zum Greifen und Handhaben von sich jeweils entlang einer Längsrichtung erstreckenden und in etwa achsparallel verlaufenden Kabelenden zweier Kabel insbesondere eines verdrillten Kabelstrangs. Die Greifereinheit umfasst zwei Greiferbacken. Die Greiferbacken können quer zur Längsrichtung, gegenläufig zwischen einer Offenstellung und einer Schliessstellung in eine Schliess- oder Öffnungsrichtung bewegt werden. Wenigstens einer der Greiferbacken und vorzugsweise jeder Greiferbacken umfasst zwei vorzugsweise als separate Bauteile ausgestaltete, in Bezug auf die Längsrichtung übereinander angeordnete Backenelemente, wobei die Kabel in der Schliessstellung klemmend von aussen her durch die Backenelemente beaufschlagbar sind. Die Greifereinheit umfasst weiter wenigstens ein aktivierbares Angriffsglied, mit dem wenigstens eines der Kabel von innen her abstützend beaufschlagbar ist, wobei das bezüglich der Backenelemente vorzugsweise als separates Bauteil ausgestaltete Angriffsglied zwischen den Backenelementen eines der Greiferbacken angeordnet ist. Aufeinander zu und voneinander weg bewegbare Backenelemente, können jeweils einem der Kabel des Kabelstrangs zugeordnet sein. Diese Backenelemente können ein Backenelemente-Paar bilden.

Wenn nachfolgend von Bewegungen in Bezug auf die Greiferbacken, deren Backenelemente und Bewegungen in Bezug auf das oder die Angriffsglieder die Rede ist, sind, soweit nicht speziell darauf hingewiesen wird, Bewegungen in die vorerwähnte Schliess- und Öffnungsrichtung gemeint, welche quer zur Längsrichtung verlaufen.

Das klemmende Beaufschlagen des jeweiligen Kabels der zum Beispiel insgesamt zwei Kabel des Kabelstrangs durch die entsprechenden Backenelemente von aussen her bedeutet, dass das Kabel im Bereich der einander abgewandten Seite der Kabel kontaktiert und klemmend festgehalten wird; das von innen her abstützende Beaufschlagen erfolgt dahingegen in einem Sektor des Kabels, der dem benachbarten Kabel zugewandt ist, also in einem Bereich innerhalb des bevorzugt unverdrillten oder entdrillten Endes des Kabelstrangs, welcher sich zwischen den beiden Kabeln befindet.

Die erfindungsgemässe Greifereinheit zeichnet sich durch eine kompakte Bauform aus. Die Ausdehnung der Greifereinheit in Längsrichtung kann klein gehalten werden, wodurch geringe Kabelüberstände möglich sind. Die unverdrillten bzw. entdrillten Längen der Kabelenden der Kabel des verdrillten Kabelstrangs können erheblich kürzer sein. Ein weiterer Vorteil der Greifereinheit besteht darin, dass sie über eine hohe Variabilität verfügt und breit anwendbar ist.

Diese Greifereinheit kann insbesondere eine Greifereinheit einer Bestückungsstation zum Bestücken von Steckergehäusen mit konfektionierten Kabelenden sein. Es ist allerdings auch vorstellbar, die erfindungsgemässe Greifereinheit in anderen Kabelbearbeitungsstationen zum Konfektionieren von Kabeln einzusetzen. Zum Beispiel könnte die Greifereinheit in einer Crimpstation zum Aufbringen von Crimpkontakten an abisolierten Kabelenden von Kabeln eines verdrillten Kabelstrangs oder in einer Tüllenstation eingesetzt werden.

Das zwischen den Backenelementen angeordnete Angriffsglied kann gegenüber den benachbarten in Querrichtung zur Längsrichtung nach entsprechender Aktivierung vor und zurück bewegt werden. Das Vorfahren oder Zurückfahren des wenigstens einen Angriffsglieds kann beispielsweise erfolgen, wenn sich die Greiferbacken in der Schliessstellung befinden und die Kabel kontaktieren und festhalten.

Die Greifereinheit kann insbesondere ein Doppelgreifer für einen verdrillten Kabelstrang bestehend aus zwei Kabeln sein. Es wäre aber auch denkbar, die nachfolgend beschriebene Greifereinheit aber auch zum Greifen und Handhaben von mehr als zwei Kabeln einzusetzen. Ein solcher Mehrfachgreifer würde mehr als ein Angriffsglied je Greiferbacken aufweisen. Wenn der Kabelstrang zum Beispiel aus drei Kabeln besteht, wären zwei Angriffsglieder je Greiferbacken vorzusehen.

In einer bevorzugten Ausführungsform ist das wenigstens eine Angriffsglied zum Ermöglichen einer Relativbewegung in Bezug auf den zugehörigen Greiferbacken beispielsweise mittels eines separaten oder eigenen Antriebs unabhängig vom zugehörigen Greiferbacken bewegbar. Das Angriffsglied lässt sich einzeln oder paarweise zusammen mit einem gegenüberliegenden, zweiten Angriffsglied individuell bewegen. Somit sind vorteilhafte Relativbewegungen des Angriffsglieds gegenüber Greiferbacken bzw. Backenelementen des Greiferbackens möglich. Das Angriffsglied kann beispielsweise, wenn sich die Greiferbacken in der Offenstellung befinden, ausgehend von einer Ausgangsstellung zum Einstellen eines gewünschten Abstands zwischen den zwei Kabeln in Bezug auf den zugehörigen Greiferbacken vorgefahren oder zurückgefahren werden. Schliesslich kann der Greiferbacken zusammen mit dem gegenüber der Ausgangsstellung vorgefahrenen oder zurückgefahrenen Angriffsglied in die Schliessstellung gebracht werden. Es sind allerdings auch andere Betriebsweisen vorstellbar. Es ist zum Beispiel vorstellbar, das wenigstens eine Angriffsglied zuerst zu den Kabeln hin zu bewegen. Erst nachdem das Angriffsglied oder die Angriffsglieder wenigstens eines der Kabel von innen her abstützend beaufschlagen, werden die Greiferbacken geschlossen. Alternativ oder zusätzlich kann das Angriffsglied beispielsweise bei Bedarf, wenn sich die Greiferbacken schon in der Schliessstellung befinden, vorgefahren oder zurückgefahren werden, während die Greiferbacken in der Schliessstellung verbleiben. Auf diese Weise ist ebenfalls ein Verändern des Abstands zwischen den zwei vom Kabelgreifer erfassten Kabeln möglich.

Ein weiterer Vorteil besteht darin, dass die Greifereinheit an Kabel mit unterschiedlichen Kabeldurchmessern anpassbar ist.

Die vorerwähnte Ausgestaltung mit einem derart bewegbaren Angriffsglied könnte auch für Greifervarianten mit einstückigen Greiferbacken vorteilhaft sein, bei denen die Backenelemente je Greiferbacken zu einem Teil zusammengesetzt sind und beispielsweise durch ein monolithisch ausgeführtes Bauteil gebildet werden, eingesetzt werden. Dieses Bauteil mit den zwei Backenelementen könnte in einem Gehäuse verbaut sein. Das Angriffsglied könnte dann quer und vorzugsweise im rechten Winkel zur Längsrichtrichtung verschiebbar gelagert im Gehäuse verbaut sein.

Vorteilhaft ist es, wenn die Greifereinheit zwei aufeinander zu und voneinander weg bewegbare Angriffsglieder aufweist. Dabei kann jedem Greiferbacken jeweils ein Angriffsglied zugeordnet sein. Somit ist zwischen den Backenelementen je eines Greiferbackens je ein Angriffsglied angeordnet. Zum Vergrössern des Abstands zwischen den Kabeln werden die Angriffsglieder aufeinander zu bewegt, der Kabelabstand lässt sich einfach dadurch verkleinern, indem die Angriffsglieder voneinander wegbewegt bzw. zurückgefahren werden. Der gewünschte Abstand zwischen zwei Kabeln des Kabelstrangs lässt sich so einfach und präzise einstellen. Die Bewegungsrichtung zum Bewegen des Angriffsglieds in den Kabelstrang (Einfahren und Vorfahren) und das Bewegen des Angriffsglieds weg vom Kabelstrang (Zurückfahren) verläuft in dieselbe Richtung wie die Schliess- und Öffnungsrichtung der Greiferbacken.

Besonders vorteilhaft kann es sein, wenn für das wenigstens eine Angriffsglied ein eigener Antrieb vorgesehen ist, mittels dem das Angriffsglied zwischen die Kabel des Kabelstrangs zum Kontaktieren und Auseinanderdrängen der Kabel fahrbar ist. Zum Betreiben der Greiferbacken wenigstens bezüglich der Bewegung zwischen Offenstellung und Schliessstellung kann ein weiterer Antrieb oder mehrere weitere Antriebe vorgesehen sein. Dank des eigenen Antriebs für das Angriffsglied oder die Angriffsglieder ist ein präzises Ansteuern des oder der Angriffsglieder möglich. Der Antrieb kann einen Elektromotor zum Aktivieren oder Antreiben des wenigstens einen Angriffsglieds umfassen. Der Elektromotor kann beispielsweise als Schrittmotor ausgestaltet sein, mit dem mit hoher Präzision das Angriffsglied um eine bestimmte Strecke translatorisch verschoben werden kann, um so den gewünschten Abstand zwischen den Kabeln einzustellen. Die Greifereinheit kann eine Steuereinrichtung aufweisen oder mit einer Steuereinrichtung verbunden oder verbindbar sein, über die der Antrieb mit dem Elektromotor oder über die ein anderer Aktor zum Aktivieren oder Antreiben des Vorfahrens des wenigstens einen Angriffsglieds zwischen die Kabel oder zum Zurückfahren ansteuerbar ist.

Jedem Angriffsglied kann ein Antrieb zugeordnet sein. Vorteilhaft kann aber auch ein gemeinsamer Antrieb zum Bewegen beider Angriffsglieder sein. Die Angriffsglieder können getriebemässig mit diesem Antrieb verbunden sein, wodurch eine simultane, gegenläufige Bewegung der Angriffsglieder gewährleistet wird. Die beiden Angriffsglieder bilden somit ein Paar.

Die Backenelemente können zum Kompensieren von Bewegungen der Kabel beim Einfahren und Vorfahren des wenigstens einen Angriffsglieds zwischen die Kabel oder beim Zurückfahren des wenigstens einen Angriffsglieds, wodurch sich der Abstand zwischen den Kabeln verändert, begrenzt in Schliess- oder Öffnungsrichtung verschiebbar im Greiferbacken gelagert sein. Zum Aufrechterhalten des Kontakts vom Backenelement zum Kabel kann es vorteilhaft sein, wenn das Backenelement mittels einer oder mehreren Federn federnd im Greiferbacken gelagert ist. Wenn die Backenelemente Klemmflächen zum Kontaktieren der Kabel aufweisen, kann die jeweilige Klemmfläche als Auflaufflanke für das Kabel dienen, an der zur Kompensation der Aufspreizbewegung des Kabels beim Ein- und Vorfahren des wenigstens einen Angriffsglieds zwischen die Kabel das Kabel entlang fahrbar ist.

Es ist denkbar, die Greiferbacken zum Erstellen der Offenstellung und einer Schliessstellung mit einem einzigen Antrieb zu betreiben. Die Greifereinheit würde damit einen gemeinsamen Antrieb umfassen, mit dem alle Backenelemente der Greiferbacken wenigstens in Bezug auf die notwendigen Querbewegungen betreibbar sind. Im Hinblick auf die Variabilität kann es jedoch vorteilhaft sein, wenn die Greifereinheit zwei Antriebe zum Betreiben der Greiferbacken umfasst, wobei einander zugewandte, je einem Kabel zugeordnete Backenelemente jeweils mittels des jeweiligen Antriebs in Schliess- oder Öffnungsrichtung bewegt werden können.

Das Angriffsglied kann ein Keil mit wenigstens einer wirksamen Keilfläche sein. Unter der wirksamen Keilfläche wird eine Keilfläche eines Keils verstanden, die in Wirkverbindung mit einem Kabel stehen oder gebracht werden können. Beim Bewegen des Keils in Schliessrichtung kann der Keil über die Klemmfläche mit einem Kabel in Kontakt gebracht werden. Beim Weiterbewegen des Keils kann das Kabel zur Seite hin, also quer zur Schliessrichtung, weggedrängt werden. Auf diese Weise kann eine Seitwärtsbewegung des Kabels zum Vergrössern des Abstands zwischen den Kabeln erzielt werden. Bevorzugt kann der Keil zwei wirksame Keilflächen zum gleichzeitigen Beaufschlagen und Auseinanderdrängen beider Kabel aufweisen.

In einer Ausführungsvariante können die Greiferbacken bezüglich ihrer Klemmflächen einen höheren Reibungskoeffizienten als die wirksamen Keilflächen aufweisen.

Der Keil kann eine Keilfläche aufweisen, die nicht in Kontakt mit einem Kabel kommt (nicht wirksame Keilfläche) und die beim Bewegen des Keils in Schliessrichtung das Kabel nicht beaufschlägt. Diese nicht wirksame Keilfläche kann eine gerade Keilfläche sein, die koplanar zur Hauptbewegungsrichtung des Keils, die der Schliessrichtung entspricht, die quer zur vorerwähnten Längsrichtung steht, verläuft. Die andere Keilfläche, die in diesem Fall einen schrägen Verlauf hat, bildet die wirksame Keilfläche.

Der Keil kann ein Keil mit zwei schrägen Keilflächen sein. Die schrägen Keilflächen bilden die erwähnten zwei wirksamen Keilflächen. Ein solcher zwei schräge Keilflächen aufweisender Keil ist auch unter der Bezeichnung «Doppelkeil» geläufig. Besonders bevorzugt ist der zwei schräge Keilflächen aufweisende Keil symmetrisch ausgestaltet. Die Symmetrieachse bzw. -ebene verläuft dabei koaxial zur Hauptbewegungsrichtung des Keils, die der Schliessrichtung entspricht, die quer zur vorerwähnten Längsrichtung steht.

Der Keil kann zum Bilden eines Doppelkeils zwei wirksame Keilflächen aufweist, wobei der Keilwinkel des Keils zwischen 30° und 90° und vorzugsweise zwischen 45° und 70° liegt und besonders bevorzugt etwa 60° beträgt.

Gemäss einer Ausführungsform kann die Greifereinheit einander zugewandte und aufeinander zu bzw. voneinander weg bewegbare Backenelemente mir Klemmflächen zum Kontaktieren des gleichen Kabels aufweisen, wobei die beiden Klemmflächen einen Winkel einschliessen, der kleiner ist als der Winkel zwischen den Keilflächen von einander zugewandten, ebenfalls ein Paar bildende Keilen. Bevorzugt kann dabei der Winkel α zwischen den Klemmflächen der einander zugewandten Backenelemente 90° betragen und der Winkel zwischen den Keilflächen von einander zugewandten Keilen 120° betragen. So kann sichergestellt werden, dass ein Kabel auch dann sicher gehalten werden kann, wenn es nur von einem Keil und zwei Backenelementen umschlossen und zwischen diesen eingeklemmt ist.

Die Backenelemente können wenigstens in einem dem Kabel zugewandten Bereich eine im Wesentlichen dreieckige Querschnittsform aufweisen. Die Klemmflächen zweier Backenelemente je Greiferbacken können im Querschnitt bzw. in der Längsrichtung gesehen eine V-förmige Konfiguration haben

Wenn die Greifereinheit ein Paar bildende, aufeinander zu und voneinander weg bewegbare Angriffsglieder aufweist, kann es vorteilhaft sein, wenn als Angriffsglieder zwei Keile mit je einer schrägen wirksamen Keilfläche und je einer geraden Keilfläche vorgesehen sind. Die Keile des Angriffsglieder-Paars können dabei beim Vor- oder Zurückfahren der Angriffsglieder in Schliess- oder Öffnungsrichtung an ihren geraden Keilflächen aneinander gleitend entlang fahrbar sein. Diese Variante eignet sich insbesondere für Kabel mit empfindlicher Isolation. Die gerade Keilflächen bilden somit Gleitflächen für die erwähnte Bewegung (Vor- oder Zurückfahren). Die gerade Keilfläche können zum gegenseitigen Führen der Keile plan ausgestaltet sein. Die wirksamen Keilflächen können profiliert ausgeführt sein.

In einer alternativen Ausführungsform kann die Greifereinheit ein Paar bildende, aufeinander zu und voneinander weg bewegbare, keilförmige Angriffsglieder aufweisen, wobei die keilförmigen Angriffsglieder in Bezug auf die Bewegungsrichtung zum Vor- oder Zurückfahren der Angriffsglieder jeweils gerade Keilflächen und schräge Keilflächen aufweisen. Die geraden Keilflächen dienen zum Abstützen der Kabel. Die schrägen Keilflächen der Angriffsglieder sind derart miteinander in Wirkverbindung bringbar, dass beim Vor- oder Zurückfahren der Angriffsglieder in Schliess- oder Öffnungsrichtung die schrägen Keilflächen gegenseitig geführt sind. Diese Ausführungsvariante eignet sich insbesondere für Kabel mit empfindlicher Isolation, bei der als Isolation des Kabels eine dicke, besonders weiche Kunststoffummantelung verwendet wird.

Zur Herabsetzung der Reibung zwischen Angriffsglied und Kabel und insbesondere zwischen Keil und Kabel kann das Angriffsglied bzw. der Keil aus einem Kunststoffmaterial mit einem geringen Reibungskoeffizienten bestehen oder damit beschichtet sein. Gute Gleiteigenschaften lassen sich erreichen, wenn beispielsweise das Angriffsglied bzw. der Keil aus einem Material wie PTFE mit geringen Reibungskoeffizienten gefertigt ist.

Die Backenelemente können vorzugsweise schlitzartige Aussparungen und zwischen den Aussparungen liegende Vorsprünge aufweisen. Dabei können die bevorzugt an in Bezug auf die Schliessrichtung einander zugewandten Vorderseiten, komplementär zueinander gestalteten Aussparungen und Vorsprünge der einander zugewandten Backenelemente wenigstens in der Schliessstellung ineinander fahrbar sein. Zusätzlich oder alternativ kann die Greifereinheit zwei einander zugewandte, gegenläufig bewegbare Keile als Angriffsglieder aufweisen, wobei im Bereich der Keilspitzen der Keile jeweils komplementär zueinander gestaltete vorzugsweise schlitzartige Aussparungen und zwischen den Aussparungen liegende Vorsprünge vorgesehen sind, die wenigstens in der Schliessstellung ineinander fahrbar sind.

Zum Erweitern der Anwendungsmöglichkeiten kann es vorteilhaft sein, wenn die Schlitzbreite der Aussparungen gegenüber der Breite der gegenüberliegenden, in diese eintauchenden Vorsprünge der jeweiligen Keile derart grösser dimensioniert ist, dass zum Erstellen eines Versatzes der Kabel die Keile in Längsrichtung relativ zueinander bewegbar sind.

Ein weiterer Aspekt der Erfindung betrifft eine Bestückungsstation zum Bestücken von Steckergehäusen mit konfektionierten Kabelenden mittels der vorgängig beschriebenen Greifereinheit, mit der Kabelenden zweier Kabel eines verdrillten Kabelstrangs erfasst und die Kabelenden der beiden Kabel in Zellen eines Steckergehäuses eingeführt werden können. Zellen sind Steckergehäuseaufnahmen oder Steckergehäusekammern, in die die konfektionierten Kabelenden eingesteckt oder auf andere Weise eingebracht werden. Mit einer solchen Greifereinheit ausgestattete Bestückungsstationen können variabel und effizient betrieben werden. Die mit der Bestückungsstation bestückten verdrillten Kabelstränge erfüllen hohe Qualitätsanforderungen. Derartige Bestückungsstation können Konfektionieranlagen nachgeschaltet sein oder Bestandteil von Konfektionieranlagen sein. Eine Konfektionieranlage kann zum Beispiel eine Abisolierstation zum Ablängen und Abisolieren der elektrischen Kabel, eine oder mehrere Crimpstationen zum Aufbringen von Crimpkontakten an die abisolierten Kabelenden und gegebenenfalls Tüllenstationen umfassen.

Weiterhin betrifft die Erfindung ein Verfahren zur Bestückung von Steckergehäusen mit konfektionierten Kabelenden von zwei Kabeln eines verdrillten Kabelstrangs, wobei an die Kabelenden Kontakte wie Stifte, Hülsen oder Crimpkontakte angebracht sind, vorzugsweise unter Verwendung der vorgängigen Bestückungsstation. Das Verfahren umfasst folgende Schritte: Erfassen der Kabel mit einer Kabelgreifereinheit, wobei die Kabel aussen von Greiferbacken umschlossen werden und die Kabel von innen her durch wenigstens ein Angriffsglied abstützend beaufschlagt werden, das zwischen die Kabel eingefahren wird; Einstellen des Abstands zwischen den Kabeln durch Vor- oder Zurückfahren des wenigstens einen Angriffsglieds; und, Einführen der Kabelenden der Kabel mittels der Kabelgreifereinheit in die gewünschten Zellen des Steckergehäuses, wobei der Abstand zwischen den Kabeln aufrechterhalten wird. Das Vor- oder Zurückfahren des wenigstens einen Angriffsglieds zum Einstellen des Abstands zwischen den Kabeln kann erfolgen, nachdem die Kabel aussen von Greiferbacken umschlossen worden sind und die Kabel bereits von innen her durch das wenigstens eine Angriffsglied abstützend beaufschlagt werden. Vorteilhaft kann es jedoch auch sein, wenn das vorerwähnte Vor- oder Zurückfahren des wenigstens einen Angriffsglieds vor dem erstgenannten Arbeitsschritt oder während dem erstgenannten Arbeitsschritt erfolgt. Das wenigstens eine Angriffsglied kann also beispielsweise bei einem Schliessvorgang (d.h. beim Bewegen der Greiferbacken in Schliessrichtung zum Erstellen der Schliessstellung, in der die Kabel aussen von den Greiferbacken umschlossen sind) entsprechend des gewünschten Kabelabstandes mehr oder weniger vorgefahren werden.

Weitere Einzelmerkmale und Vorteile der Erfindung ergeben sich aus der nachfolgenden Beschreibung von Ausführungsbeispielen und aus den Zeichnungen. Es zeigen:
- Figur 1: eine perspektivische Darstellung einer erfindungsgemässen, zwei Keile aufweisenden Greifereinheit in einer Schliessstellung und zwei Kabel, die von der geschlossenen Greifereinheit erfasst sind,
- Figur 2a: die Greifereinheit von Fig. 1, jedoch aus einem anderen Blickwinkel und in einer leicht verkleinerten perspektivischen Darstellung,
- Figur 2b: die Greifereinheit in einer Vorderansicht,
- Figur 3a: die Greifereinheit von Fig. 2a mit weiter zwischen die Kabel eingefahrenen Keilen zum Vergrössern des Abstands zwischen den Kabeln,
- Figur 3b: die Greifereinheit in der Vorderansicht,
- Figur 4a: die Greifereinheit von Fig. 2a mit dickeren, von der Greifereinheit erfassten Kabeln,
- Figur 4b: die Greifereinheit in der Vorderansicht,
- Figur 5a: eine perspektivische Darstellung der Greifereinheit in Offenstellung,
- Figur 5b: die offene Greifereinheit sowie zwei dazwischen liegende Enden zweier Kabel,
- Figur 6: ein einzelner Keil der Greifereinheit in einer leicht vergrösserten perspektivischen Darstellung,
- Figur 7: zwei Keile der Greifereinheit in der Schliessstellung in einer leicht vergrösserten perspektivischen Darstellung,
- Figur 8a: eine weitere perspektivische Darstellung der Greifereinheit,
- Figur 8b: die Greifereinheit nach Durchführung eines Verfahrensschrittes zum Erstellen eines Versatzes,
- Figuren 9a - 9d: perspektivische, jeweils einzelne Arbeitsschritte entsprechende Darstellungen der Greifereinheit beim Erstellen des Versatzes,
- Figuren 10a - 10d: perspektivische, jeweils einzelne Arbeitsschritte entsprechende Darstellungen der Greifereinheit bei einem alternativen Erstellen des Versatzes,

- Figur 11a: zwei Keile in einer perspektivischen Ansicht für eine Greifereinheit gemäss einem zweiten Ausführungsbeispiel,
- Figur 11b: eine perspektivische Ansicht der Greifereinheit mit den Keilen aus Fig. 11a in Offenstellung,

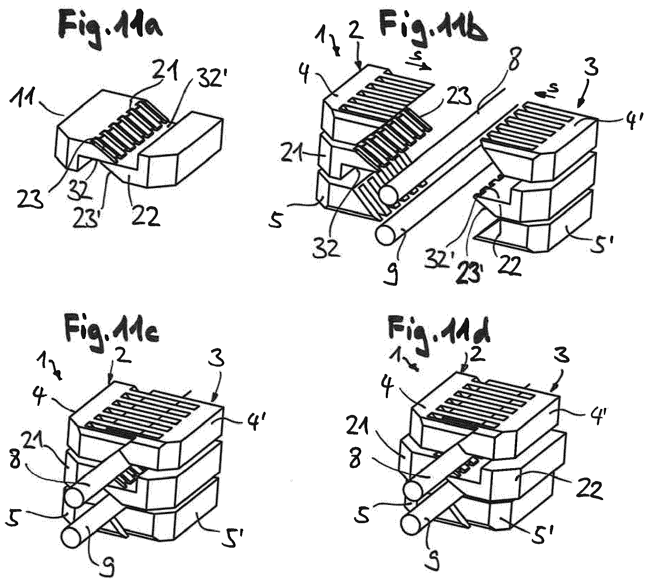

- Figur 11b: die Greifereinheit in Schliessstellung,
- Figur 11b: die Greifereinheit nach Zurückfahren der Keile zum Verkleinern des Abstands zwischen den Kabeln,

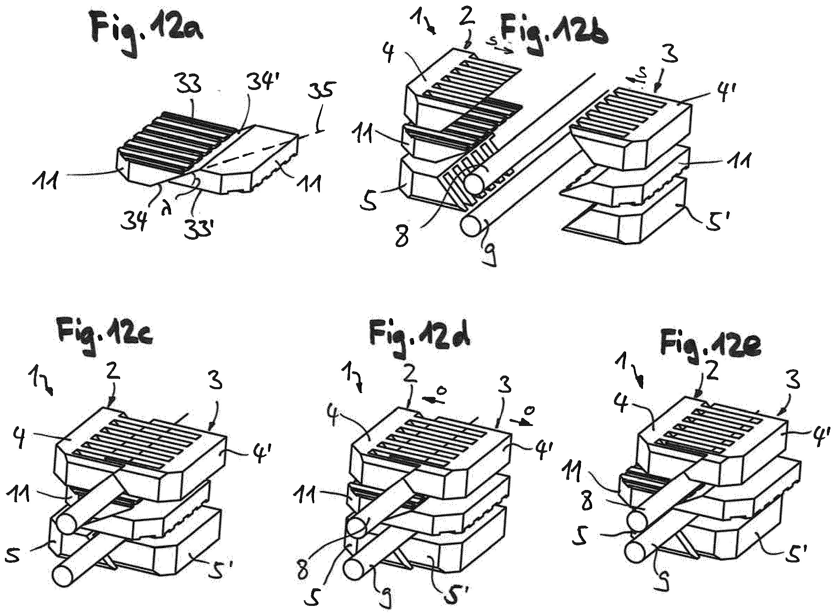

- Figur 12a: zwei Angriffsglieder in einer perspektivischen Ansicht für eine Greifereinheit gemäss einem dritten Ausführungsbeispiel,
- Figur 12b: eine perspektivische Ansicht der Greifereinheit mit den Angriffsgliedern aus Fig. 12a in Offenstellung,
- Figur 12c: die Greifereinheit in Schliessstellung mit weit ineinander verschobenen Angriffsgliedern,
- Figur 12d: die Greifereinheit in der Schliessstellung mit ineinander verschobenen Angriffsgliedern,
- Figur 12e: die Greifereinheit in der Schliessstellung mit gegenüber der in Fig. 12 d gezeigten Stellung etwas auseinander verschobenen Angriffsgliedern,

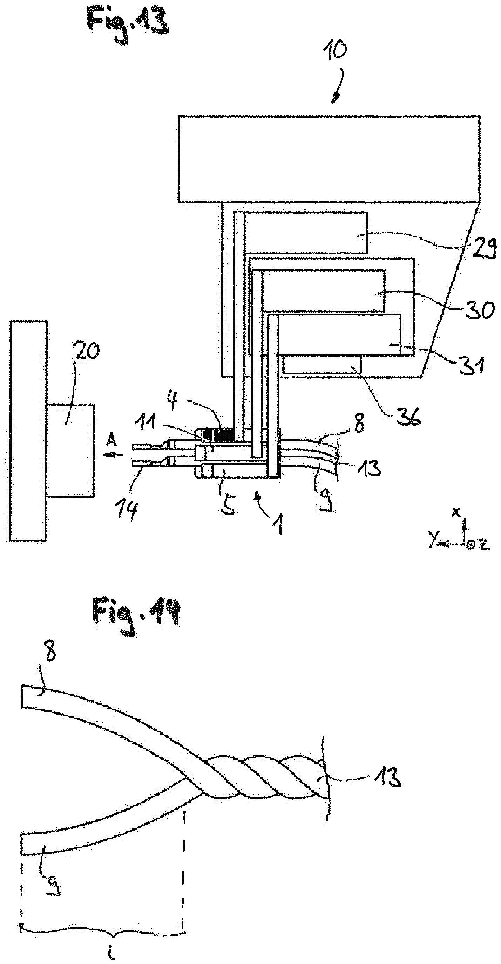

- Figur 13: eine vereinfachte Seitenansicht einer Bestückungsstation mit einer erfindungsgemässen Greifereinheit, und
- Figur 14: eine Ansicht auf einen verdrillten Kabelstrang bestehend aus zwei Kabeln mit einem entdrillten Ende eines Kabelstranges mit zwei Kabeln.

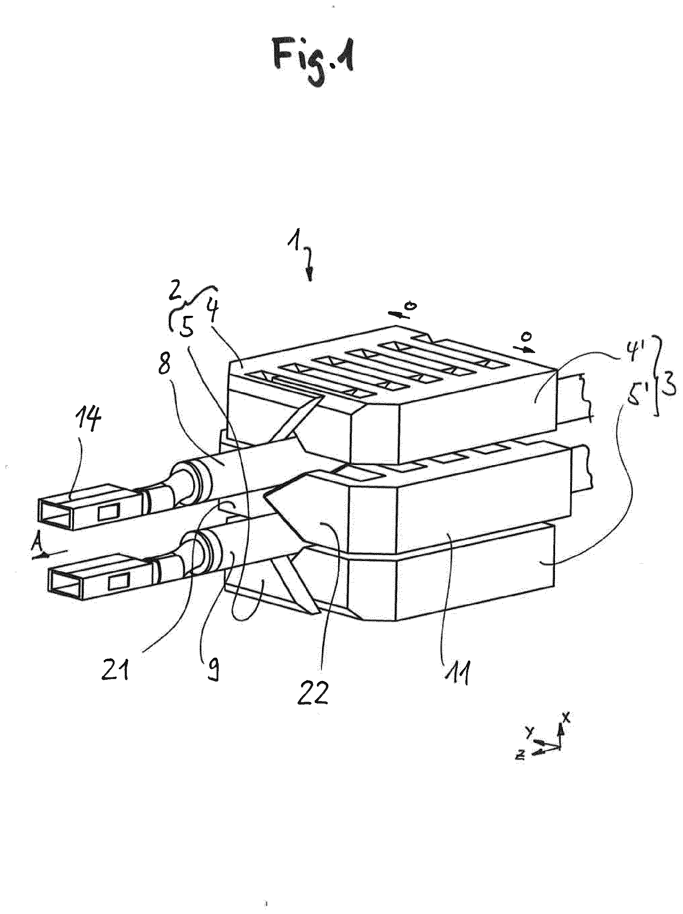

Figur 1 zeigt eine Greifereinheit 1 zum Greifen und Handhaben von sich jeweils entlang einer Längsrichtung A erstreckenden und in etwa achsparallel verlaufenden Kabelenden zweier Kabel 8, 9 eines (hier nicht dargestellten; vgl. Fig. 14) verdrillten Kabelstrangs. Daher wird nachfolgend der Einfachheit halber für die zwei Kabel 8, 9 erfassende Greifereinheit 1 auch der Begriff «Doppelgreifer» verwendet.

Der hier gezeigte Doppelgreifer 1 dient insbesondere zum Bestücken von Steckergehäusen mit konfektionierten Kabelenden. An den jeweiligen abisolierten Kabelenden sind vorliegend beispielhaft Crimpkontakte 14 angebracht. Mit dem Doppelgreifer 1 werden die konfektionierten Kabelenden der Kabel 8, 9 zu (hier nicht dargestellten) Steckergehäusen gebracht und in dafür vorgesehene Steckergehäuseaufnahmen oder Steckergehäusekammern eingesetzt.

Das in Fig. 1 gezeigte kartesische Koordinatensystem dient als Hilfestellung für das Verständnis der Richtungen und der Hauptbewegungen der Komponenten des Doppelgreifers 1. Der Doppelgreifer 1 umfasst zwei quer zu einer Längsrichtung A, gegenläufig zwischen einer Offenstellung und einer Schliessstellung in y-Richtung bewegbare Greiferbacken 2, 3. Die Längsrichtung A entspricht dabei auch der Richtung, in der die jeweiligen Kabelachsen der Kabel 8, 9 verlaufen. Die Greiferbacken 2, 3 bestehen aus zwei als separate Bauteile ausgestaltete, in Bezug auf die Längsrichtung A übereinander angeordnete Backenelemente 4, 4', 5, 5'. In der in Fig. 1 gezeigten Schliessstellung umgeben die Greiferbacken 2, 3 die beiden Kabel 8, 9. Das jeweilige Kabel 8, 9 wird in der Schliessstellung zum klemmenden Festhalten der Kabel von aussen beaufschlagt. Die in Fig. 1 geschlossenen Greiferbacken 2, 3 können in o-Richtung zum Erstellen der Offenstellung bewegt werden.

Die Greifereinheit 1 weist weiterhin zwei Angriffsglieder 11 auf, mit denen in der Schliessstellung die Kabel 8, 9 von innen her abstützend beaufschlagt werden. Je ein Angriffsglied 11 ist dabei zwischen den Backenelementen 4, 5; 4', 5' eines der Greiferbacken 2, 3 angeordnet. Die zwischen die beiden Kabel 8, 9 eindringenden Angriffsglieder 11 sind bezüglich der Backenelemente 4, 4', 5, 5'als separate Bauteile ausgestaltet. Ein Vorteil des Doppelgreifers 1 besteht unter anderem darin, dass der Längenbereich der Kabelenden, welcher nicht verdrillt ist, klein gehalten werden kann.

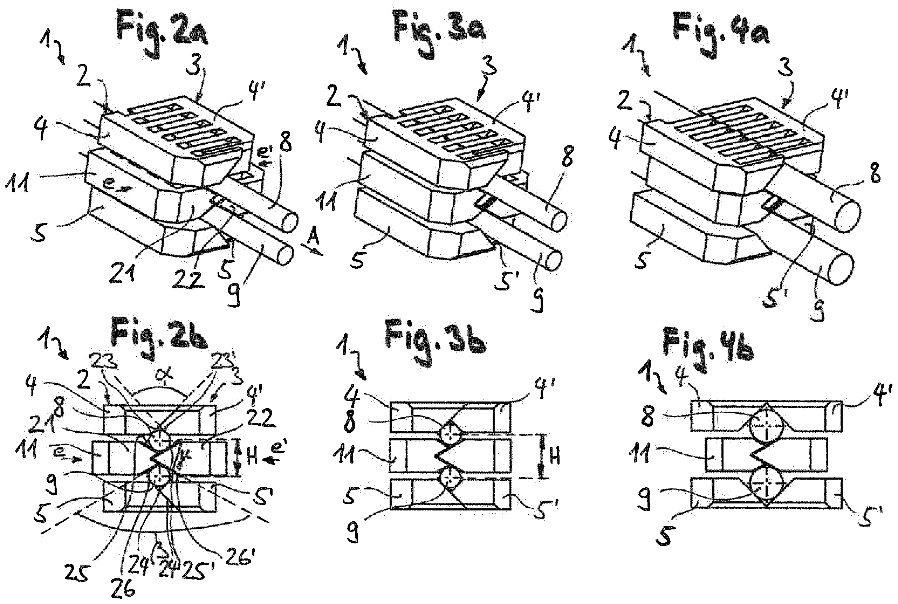

Die Angriffsglieder 11 sind als aktive Elemente ausgestaltet und können von der hier gezeigten Stellung weiter zwischen die Kabel 8, 9 in y-Richtung bewegt oder von diesen weg bewegt werden. Die Bewegungsrichtungen zum Verfahren der Angriffsglieder in den Kabelstrang (Einfahren und Vorfahren) und das Fahren der Angriffsglieder weg vom Kabelstrang (Zurückfahren) verläuft ersichtlicherweise in dieselbe Richtung wie die Schliess- und Öffnungsrichtung der Greiferbacken 2, 3. Das Einfahren und Vorfahren sowie das Zurückfahren der Angriffsglieder einerseits und das Bewegen der Greiferbacken in Schliessrichtung oder Öffnungsrichtung der Greiferbacken erfolgen für den in Fig. 1 gezeigten Doppelgreifer in y-Richtung. Der Aufbau und die Funktionsweise des Doppelgreifers 1 wird im Detail anhand der nachfolgenden Figuren 2 bis 10 noch genau erläutert.

Sobald der Doppelgreifer 1 die Kabelenden der Kabel 8, 9 wunschgemäss erfasst hat, kann der ganze Doppelgreifer 1 zum Abschliessen des Bestückungsvorgangs dann je nach Zielort in x-, y-, und/oder z-Richtung bewegt werden. Die Kabelenden der beiden Kabel 8, 9 bleiben dabei lagemässig im Doppelgreifer 1 fixiert.

Die mit A bezeichnete Längsrichtung ist in den Figuren als horizontale Richtung eingezeichnet. Die beiden Backenelemente 4, 4', die ein Paar bilden und dem oberen Kabel 8 zugeordnet sind, sind oben angeordnet und die beiden Backenelemente 5, 5', die ebenfalls ein Paar bilden und dem unteren Kabel 8 zugeordnet sind, sind unten angeordnet. Entsprechend werden die Backenelemente 4, 4' nachfolgend der Einfachheit halber und zum besseren Verständnis als «obere Backenelemente» und die Backenelemente 5, 5' als «untere Backenelemente» bezeichnet. Selbstverständlich könnte der Doppelgreifer 1 je nach Bedarf auch andersartig orientiert und ausgerichtet sein. Die Längsrichtung A könnte beispielsweise vertikal oder irgendeine andere Richtung verlaufen. Die Backenelemente 4, 4'; 5, 5' könnten um die Achse A verdreht angeordnet sein. Anstatt der hier gezeigten horizontal verlaufenden Hauptbewegungsrichtungen könnten die Greiferbacken 2, 3, deren Backenelemente 4, 4'; 5, 5' und die Angriffsglieder 11 auch in vertikaler Richtung (in Richtung der x-Achse) bewegt werden.

Der Doppelgreifer 1 kann wie folgt die beiden Kabel 8, 9 ergreifen: Die konfektionierten Enden der Kabel 8, 9 werden in an sich bekannter Weise ausgerichtet. Danach kann der Doppelgreifer 1 die beiden Einzelkabelenden aufnehmen. Dabei fährt das Paar mit den Angriffsgliedern 11 in die Mitte zwischen die beiden Kabel 8, 9 soweit zusammen bis der gewünschte Abstand (H) der Kabel 8, 9 erreicht ist (vgl. nachfolgende Fig. 2b, 3b). Die oberen Backenelemente 4, 4' und die unteren Backenelemente 5, 5' werden ebenfalls zusammengefahren, so dass ein Einzelkabelende von jeweils einem Greifer und dem Keilpaar an vier Stellen geklemmt wird. Mit dem Doppelgreifer 1 ist es aber auch möglich, die jeweiligen Kabel anstatt an vier Stellen an nur drei Stellen sicher lagemässig zu fixieren. Das obere Kabel 8 wird dann nur noch zwischen den oberen Backenelementen 4, 4' und nur einem der Angriffsglieder 11 eingeklemmt; das untere Kabel 9 wird dann nur noch zwischen den unteren Backenelementen 5, 5' und dem anderen Angriffsglied 11 eingeklemmt. Diese Dreipunktelagerung ermöglicht spezielle Betriebsweisen des Doppelgreifers. Beispielsweise kann dank der Dreipunktelagerung ein Versatz zwischen den Kabeln erstellt werden.

Um das Bestücken von Steckergehäusen mit unterschiedlichen Abständen zwischen den Zellen zu ermöglichen, muss der Abstand zwischen den Kabeln 8, 9 entsprechend angepasst werden. Der Doppelgreifer 1 ermöglicht auf einfache Art und Weise eine solche Anpassung des Abstands, in dem die Angriffsglieder 11 nach entsprechender Aktivierung soweit vor oder zurückgefahren werden, bis der gewünschte Kabelabstand erreicht ist. In den Figuren 2 und 3 ist beispielhaft gezeigt, wie der Kabelabstand sich verändern lässt. Die Figuren 2 zeigen den Doppelgreifer 1 mit Greiferbacken 2, 3 in der Schliessstellung. In der in den Figuren 2 gezeigten Stellung sind die Angriffsglieder 11 soweit eingefahren, dass die Kabel 2, 3 um einen bestimmten Abstand H voneinander entfernt sind (Fig. 2b). Zum Vergrössern des Abstands H zwischen den Kabeln 8, 9 werden die Angriffsglieder 11 in Richtung e bzw. e' in den Raum zwischen den Kabeln 8, 9 eingefahren. Die Kabel 8, 9 werden dabei von den als Keile 21, 22 ausgestalteten Angriffsglieder 11 auseinander gedrängt, wodurch sich der Kabelabstand vergrössert. Zum Kompensieren der Bewegungen der Kabel 8, 9 nach oben und unten werden gleichzeitig die Backenelemente 4, 4'; 5, 5' seitlich verschoben. Hierzu sind die Backenelemente 4, 4'; 5, 5' in Schliess- oder Öffnungsrichtung begrenzt verschiebbar im Greiferbacken 2, 3 gelagert. Die Figuren 3a und 3b zeigen den Doppelgreifer 1 mit gegenüber der Ausgangsstellung gemäss Fig. 2a, 2b weiter eingefahrenen Angriffsgliedern 11. Der Kabelabstand H ist nun vergrössert.

Mit dem Doppelgreifer 1 lässt sich jedoch nicht nur der Abstand H zwischen den Kabeln 8, 9 verändern. Der Doppelgreifer 1 eignet sich auch zum Greifen und Handhaben von Kabelenden von Kabeln mit unterschiedlichen Kabeldurchmessern. Wie aus den Figuren 4a und 4b hervorgeht, kann derselbe Doppelgreifer 1 auch Kabel 8, 9 mit deutlich grösserem Kabeldurchmesser erfassen. Ein Umrüsten ist nicht notwendig.

Aus Fig. 2b ist weiterhin entnehmbar, dass die Angriffsglieder 11 als Keile 21, 22 ausgestaltet sind. Zum Beaufschlagen beider Kabel 8, 9 weist jeder Keil 21, 22 zwei schräge, wirksame Keilflächen auf. Die Keilflächen des linken Keils 21 sind mit 25 und 26 und die Keilflächen des rechten Keils 22 sind mit 25' und 26' bezeichnet. Die symmetrisch gestalteten Keile 21, 22 sind ersichtlicherweise im Querschnitt als Doppelkeile ausgestaltet. Der Keilwinkel γ der Keile 21, 22 beträgt im vorliegenden Ausführungsbeispiel 60°.

Die einander zugewandten, aufeinander zu und voneinander weg bewegbare ein Paar bildenden oberen Backenelemente 4, 4' weisen Klemmflächen 23, 23' auf, die einen Winkel α einschliessen. Der von den Klemmflächen 24, 24` der unteren Backenelemente 5, 5' eingeschlossene Winkel ist entsprechend gleich gross. Der Winkel zwischen den Keilflächen 25 und 25' bzw. 26 und 26' voneinander zugewandten Keilen 21, 22 ist mit β bezeichnet. Für eine einwandfreie Funktion des Doppelgreifers 1 soll der Winkel α kleiner als der Winkel β sein. Im vorliegenden Ausführungsbeispiel beträgt der Winkel α zwischen zwei Klemmflächen 23, 23' der einander zugewandten oberen Backenelemente 4, 4' 90°. Dasselbe gilt in Bezug auf die unteren Backenelemente 5, 5'. Der Winkel β zwischen den Keilflächen 25 und 25' bzw. 26 und 26' voneinander zugewandten Keilen 21, 22 beträgt vorliegend 120°. Diese Geometrie stellt sicher, dass das jeweilige Kabel 8, 9 auch dann sicher gehalten werden kann, wenn es nur von einem Keil 21, 22 und zwei Backenelementen 4, 4'; 5, 5' umschlossen ist und klemmend oder abstützend beaufschlagt wird. Das Kabel kann von drei Seiten her gehalten nicht herausfallen.

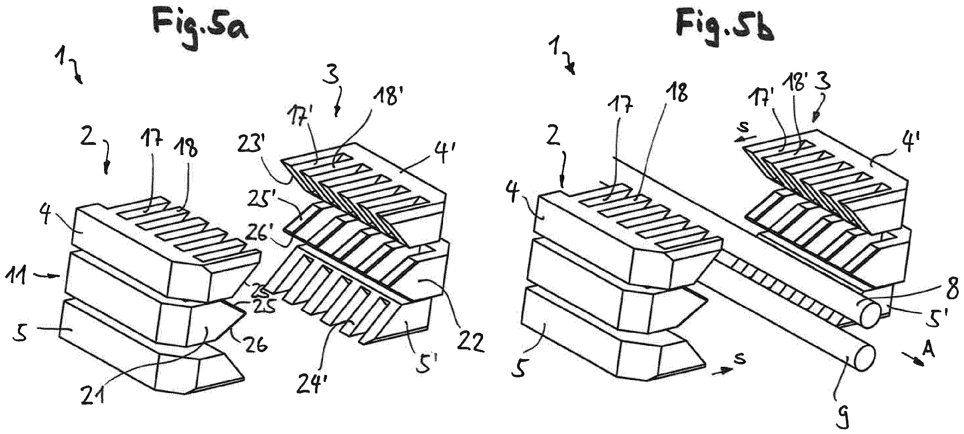

Konstruktive Details zur Ausgestaltung des Doppelgreifers 1 sind weiter aus den Figuren 5 a, 5b entnehmbar. Hieraus ist etwa ersichtlich, dass sowohl die oberen Backenelemente 4, 4' als auch die unteren Backenelemente 5, 5' jeweils an einander zugewandten Vorderseiten, komplementär zueinander gestaltete schlitzartige Aussparungen 17, 17' und zwischen den Aussparungen liegende Vorsprünge 18, 18' aufweisen, die ineinander fahrbar sind. Die Aussparungen 17, 17' und Vorsprünge 18, 18' der einander zugewandten Backenelemente 4, 4'; 5, 5' tauchen in der Schliessstellung ineinander ein (vgl. z.B. vorgängige Fig. 1). Die beiden einander zugewandten, gegenläufig bewegbaren Keile 21, 22 weisen im Bereich der Keilspitzen jeweils komplementär zueinander gestaltete schlitzartige Aussparungen 27, 27' und zwischen den Aussparungen liegende Vorsprünge 28, 28' auf, die ineinander fahrbar sind.

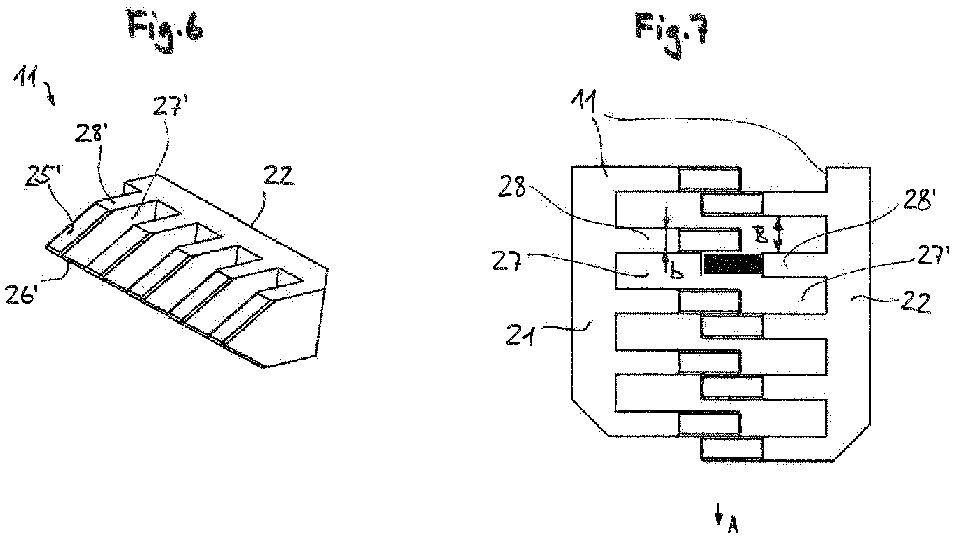

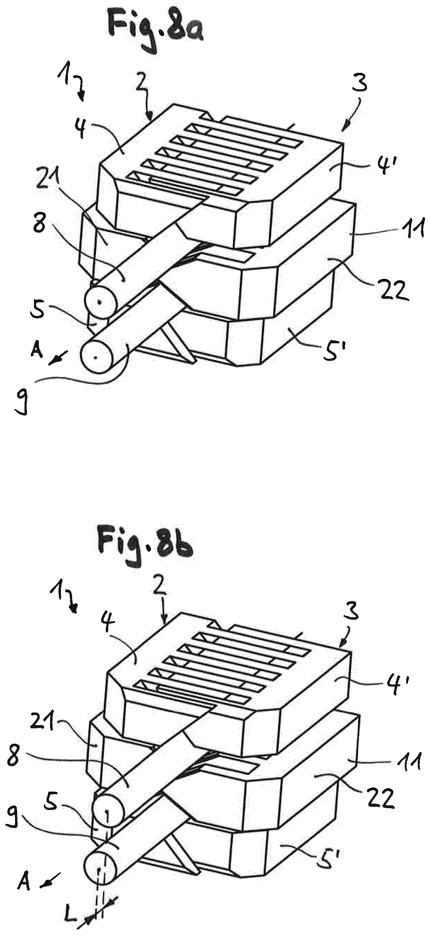

Fig. 6 zeigt nochmals den Keil 22 des Doppelgreifers gemäss dem vorliegenden ersten Ausführungsbeispiel. Wie insbesondere aus Fig. 7 gut erkennbar ist, ist die Schlitzbreite B der Aussparungen 27, 27' gegenüber der Breite b der gegenüberliegenden, in diese eintauchenden Vorsprünge 28, 28' der jeweiligen Keile 21, 22 grösser dimensioniert. Dadurch ist es möglich, mit dem Doppelgreifer einen Versatz der Kabel zu erzielen. Nach Erstellen des Versatzes zwischen den Kabeln ist einer der Keile 21 gegenüber dem anderen Keil 22 in Bezug auf die Längsrichtung A verschoben. Fig. 8b zeigt den Doppelgreifer 1 in einer solchen Versatzstellung. Das untere Kabel 9 ist gegenüber dem oberen Kabel 8 um eine Versatzstrecke L in axialer Richtung A weiter vorgerückt. Fig. 8a zeigt zum Vergleich den Doppelgreifer 1 in einer Ausgangsstellung. Das untere Kabel 9 wurde mit den zugehörigen Backenelementen 5, 5' und einem der Keile, hier beispielhaft der Keil 22, entlang der Längsrichtung A um die Versatzstrecke von wenigen Millimetern nach vorne geschoben. Bei Kabeln mit belastbarer Isolierung reicht es aus, wenn die Keilflächen 25, 25'; 26, 26' der Keile 21, 22 so ausgestaltet sind, dass ihre Reibung auf der Kabelisolation der Kabel klein ist.

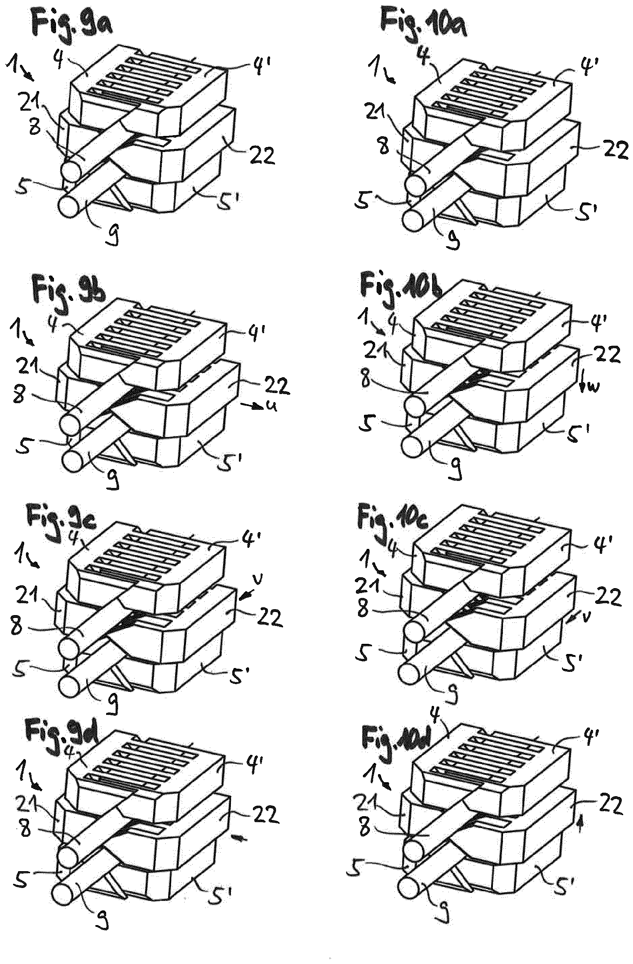

Bei Kabeln mit empfindlicher Isolation kann der Versatz gemäss einem modifizierten Verfahren erstellt werden. Die einzelnen Arbeitsschritte zum Erstellen des Versatzes mittels des Doppelgreifers 1 gemäss dem erwähnten modifizierten Verfahren zeigen die Figuren 9a bis 9d. Die Figuren 10a bis 10d betreffen eine Variante des modifizierten Verfahrens zum Erstellen des Versatzes. Um sicherzustellen, dass die Isolation der Kabel 8, 9 nicht verletzt wird, verändert sich der Ablauf wie folgt: Die jeweiligen einzelnen Enden der Kabel 8, 9 werden jeweils nur von einem Backenelemente-Paar 4, 4' bzw. 5, 5' und einem zugewiesenen Keil 21 bzw. 22 an drei Stellen geklemmt (Fig. 9a; Fig. 10a). Die aufgeteilten Greifergruppen, also zum Beispiel das obere Backenelemente-Paar 4, 4' mit dem Keil 21 auf der einen Seite und das untere Backenelemente-Paar 5, 5' mit dem Keil 22 auf der anderen Seite fahren nun soweit auseinander bis die jeweils anderen, nicht zur Greifergruppe gehörigen Keile 22, 21 keinen Kontakt mehr zu den jeweiligen Kabeln 8, 9 haben. Dies kann durch Verfahren beispielsweise einer der Greifergruppe, zum Beispiel der Greifergruppe mit dem unteren Backenelemente-Paar 5, 5' und dem Keil 22 in Richtung des Pfeils u (Fig. 9b) oder durch eine Bewegung dieser Greifergruppe in die Höhe in Richtung des Pfeils w (Fig. 10b) geschehen. Danach wird der Versatzbetrag in Kabelrichtung durch die genannte Greifergruppe mit dem unteren Backenelemente-Paar 5, 5' und dem Keil 22 in Richtung des Pfeils v abgefahren (Fig. 9c, Fig. 10c) und die beiden Greifergruppen werden wieder zusammengebracht (Fig. 9d, Fig. 10d). Die Bewegungsrichtungen zum Zusammenbringen der beiden Greifergruppen sind in den Figuren 9d und 10d jeweils mit Pfeilen angedeutet, die ersichtlicherweise in Gegenrichtung zu denjenigen gemäss Fig. 9b bzw. 10b verlaufen.

Die Figuren 11a bis 11d betreffen ein zweites Ausführungsbeispiel für einen Doppelgreifer 1. Die hier eingesetzten Keile 21, 22 weisen jeweils nur eine wirksame Keilfläche auf. Die Greifereinheit 1 umfasst wie etwa Fig. 11a zeigt, ein Paar bildende, aufeinander zu und voneinander weg bewegbare Keile 21, 22, wobei die jeweiligen Keile 21, 22 je eine schrägen wirksamen Keilfläche 23, 23' und je eine geraden Keilfläche 32, 32` aufweisen. Die Keile 21, 22 sind beim Vor- oder Zurückfahren in Schliessrichtung oder Öffnungsrichtung an ihren geraden Keilflächen 32, 32` aneinander gleitend entlang fahrbar. Die schrägen wirksamen Keilflächen 23, 23' sind zum sicheren Halten der Kabel profiliert. Die geraden Keilflächen 32, 32` sind zum gegenseitigen Führen der Keile plan ausgestaltet, wodurch sie Gleitflächen für die vorerwähnte Bewegung bilden. Die Backenelemente 4, 4'; 5, 5' sind in etwa gleich wie diejenigen gemäss dem vorgängigen Ausführungsbeispiel ausgestaltet. Wie anhand Fig. 11c und 11d gut erkennbar ist, sind die Kabel 8, 9 bei geschlossenem Doppelgreifer 1 auch in einer Ausgangsstellung jeweils in einer Dreipunktelagerung im Doppelgreifer 1 erfasst. Mit dem Doppelgreifer 1 gemäss diesem Ausführungsbeispiel lassen sich Kabel 8, 9 mit empfindlicher Isolation ohne Zwischenschritte in gerader Bewegung in Längsrichtung in eine Versatzposition bringen, was Prozesszeit einspart. Ein Vorteil gegenüber dem ersten Ausführungsbeispiel besteht darin, dass eine vergleichsweise grosse Versatzstrecke möglich ist.

Die Figuren 12a bis 12d betreffen ein drittes Ausführungsbeispiel für einen Doppelgreifer 1. Dieser Doppelgreifer 1 zeichnet sich durch eine besonders schonende Behandlung der Kabel aus. Der Doppelgreifer 1 umfasst ein Paar bildende, aufeinander zu und voneinander weg bewegbare keilförmig ausgestaltete Angriffsglieder 11. Die jeweiligen keilförmigen Angriffsglieder 11 sind in Bezug auf die Bewegungsrichtung zum Vor- oder Zurückfahren der Angriffsglieder mit geraden Keilflächen 33, 33' und schrägen Keilflächen 34, 34` ausgestattet. Die geraden, in den Figuren 12a bis 12d waagrechten Keilflächen 33, 33 ` dienen zum Abstützen der jeweiligen Kabel 8, 9. Dies kann auch mit geringerem Klemmdruck geschehen, weshalb diese Ausführung sich besonders zur Handhabung von Kabel mit dicken, sehr weichen Isolationen eignet. Die schrägen Keilflächen 34, 34` der Angriffsglieder 11 sind derart miteinander in Wirkverbindung bringbar, dass beim Vor- oder Zurückfahren der Angriffsglieder 11 in Schliessrichtung s oder in Öffnungsrichtung o die schrägen Keilflächen 34, 34` gegenseitig geführt sind. Die beteiligten Klemmflächen der Backenelemente 4, 4'; 5, 5' und der keilförmigen Angriffsglieder 11 bilden Ecken mit Winkeln von 90° und 45°. Diese Winkel sind genügend stumpf, damit sich das jeweilige Kabel 8, 9, auch wenn es eine dicke und weiche Isolation aufweist, seitlich nicht aus dem Doppelgreifer drücken lässt. Die mit 35 bezeichnete Bewegungsbahn der Angriffsglieder 11 ist um den Winkel λ gekippt. Mit diesem Doppelgreifer 1 können auch sensible Kabel ohne Beschädigungen erfasst und zum gewünschten Ziel gebracht werden.

Fig, 13 zeigt eine Bestückungsstation 10 zum Bestücken von Steckergehäusen 20 mit konfektionierten Kabelenden von Kabeln 8, 9 mittels eines Doppelgreifers 1, wie er vorgängig beschrieben wurde. Der Doppelgreifer 1 welcher erfasst die konfektionierten Kabelenden zweier Kabel eines Kabelstrangs 13 und führt die Kabelenden der beiden Kabel 8, 9 in Zellen des Steckergehäuses 20 ein. Wie aus Fig. 13 hervorgeht, weisen die oberen Backenelemente 4, 4' und die unteren Backenelemente 5, 5' sowie auch die Angriffsglieder 11 jeweils eigene Antriebe zum Betreiben und Durchführen der notwendigen Querbewegungen in y-Richtung auf. Der mit 29 bezeichnete Antrieb ist den oberen Backenelementen 4, 4', der mit 31 bezeichnete Antrieb ist den unteren Backenelementen 5, 5' und der mit 30 bezeichnete Antrieb ist den Angriffsgliedern zugeordnet. Nach Eingang von einer (hier nicht dargestellten) Steuereinrichtung übermittelten Steuerbefehlen werden die Antriebe 29, 30 und 31 aktiviert und die notwendigen Bewegungen der Komponenten (obere Backenelemente 4, 4', untere Backenelemente 5, 5', Angriffsglieder 11) des Doppelgreifers zum Erstellen der Offenstellung oder der Schliessstellung der Greiferbacken und zum Vorfahren oder Zurückfahren der Angriffsglieder ausgeführt.

Aus Fig. 13 ist weiter erkennbar, dass die unteren Backenelemente 5, 5' und das zugehörige Angriffsglied 11 zu einer Gruppe zusammengefasst sind und die zusammen gruppierten Backenelemente 5, 5' und Angriffsglied 11 gemeinsam zum Erstellen eines Versatzes mittels eines Versatzantriebs 36 in Längsrichtung A (y-Richtung) bewegt werden können.

In Fig. 14 ist ein Ende eines verdrillten Kabelstranges 13 mit zwei Kabeln 8, 9 gezeigt. Das unverdrillte bzw. entdrillte Ende des Kabelstranges 13 ist mit i bezeichnet. Da für gewöhnlich nur das unverdrillte Ende i des Kabelstranges 13 sich vom Doppelgreifer 1 erfassen lässt, kann beispielsweise im Hinblick auf eine hohe Signalübertragungsqualität des verdrillten Kabelstranges 14 wichtig sein, den Abschnitt i möglichst kurz zu halten.

## Patentansprüche

1. Greifereinheit (1) zum Greifen und Handhaben von Kabelenden zweier Kabel (8, 9) eines insbesondere verdrillten Kabelstrangs (13) mit zwei Greiferbacken (2, 3), wobei wenigstens einer der Greiferbacken (2, 3) und vorzugsweise jeder Greiferbacken (2, 3) zwei übereinander angeordnete Backenelemente (4, 4'; 5, 5') umfasst, wobei die Kabel (8, 9) klemmend von aussen durch die Backenelemente (4, 4'; 5, 5') beaufschlagbar sind, **dadurch gekennzeichnet, dass** die Greifereinheit (1) wenigstens ein aktivierbares Angriffsglied (11) umfasst, mit dem wenigstens eines der Kabel (8, 9) von innen her abstützend beaufschlagbar ist, wobei das Angriffsglied (11) zwischen den Backenelementen (4, 4'; 5, 5') eines der Greiferbacken (2, 3) angeordnet ist.

2. Greifereinheit (1) nach Anspruch 1, **dadurch gekennzeichnet, dass** das wenigstens eine Angriffsglied (11) unabhängig vom Greiferbacken (2, 3) bewegbar ist.

3. Greifereinheit (1) nach Anspruch 1 oder 2, **dadurch gekennzeichnet, dass** zwei Angriffsglieder (11) vorgesehen sind, wobei jedem Greiferbacken (2, 3) jeweils ein Angriffsglied (11) zugeordnet ist.

4. Greifereinheit (1) nach einem der Ansprüche 1 bis 3, **dadurch gekennzeichnet, dass** für das wenigstens eine Angriffsglied (11) ein eigener Antrieb (30) vorgesehen ist.

5. Greifereinheit (1) nach einem der Ansprüche 1 bis 4, **dadurch gekennzeichnet, dass** die Backenelemente (4, 4'; 5, 5') begrenzt in Schliess- oder Öffnungsrichtung verschiebbar im Greiferbacken (2, 3) gelagert sind, wodurch beim Einfahren des Angriffsglieds (11) zwischen die Kabel (8, 9) oder beim Zurückfahren des Angriffsglieds (11) der Abstand (H) zwischen den Kabeln (8, 9) variierbar ist.

6. Greifereinheit (1) nach einem der Ansprüche 1 bis 5, **dadurch gekennzeichnet, dass** das wenigstens eine Angriffsglied (11) ein Keil (21, 22) mit wenigstens einer wirksamen Keilfläche (25, 25'; 26, 26') ist.

7. Greifereinheit (1) nach Anspruch 6, **dadurch gekennzeichnet, dass** der Keil (21, 22) zwei wirksame Keilflächen (25, 25'; 26, 26') aufweist, wobei der Keilwinkel (γ) des Keils (21, 22) zwischen 30° und 90° und vorzugsweise zwischen 45° und 70° liegt und besonders bevorzugt etwa 60° beträgt.

8. Greifereinheit (1) nach Anspruch 6 oder 7, **dadurch gekennzeichnet, dass** einander zugewandte, ein Paar bildende Backenelemente (4, 4'; 5, 5') der zwei Greiferbacken (2, 3) Klemmflächen (23, 23'; 24, 24') zum Kontaktieren des gleichen Kabels (8, 9) aufweisen, wobei die beiden Klemmflächen (23, 23'; 24, 24') einen Winkel (α) einschliessen, der kleiner ist als der Winkel (β) zwischen den Keilflächen (25, 25'; 26, 26') von einander zugewandten, ebenfalls ein Paar bildenden Keilen (21, 22), wobei bevorzugt der Winkel (α) zwischen den Klemmflächen (23, 23'; 24, 24') der einander zugewandten Backenelemente (4, 4'; 5, 5') 90° beträgt und der Winkel (β) zwischen den Keilflächen (25, 25'; 26, 26') von einander zugewandten Keilen (21, 22) 120° beträgt.

9. Greifereinheit (1) nach Anspruch 6, **dadurch gekennzeichnet, dass** zwei Keile (21, 22) mit je einer schrägen wirksamen Keilfläche (23, 23') und je einer geraden Keilfläche (32, 32`) vorgesehen sind, wobei die Keile (21, 22) an ihren geraden Keilflächen (32, 32`) aneinander gleitend entlang fahrbar sind.

10. Greifereinheit (1) nach einem der Ansprüche 1 bis 6, **dadurch gekennzeichnet, dass** die Greifereinheit (1) ein Paar bildende, aufeinander zu und voneinander weg bewegbare Angriffsglieder (11) aufweist, wobei die Angriffsglieder (11) keilförmig ausgestaltet sind, wobei die keilförmigen Angriffsglieder (11) gerade Keilflächen (33, 33`) und schräge Keilflächen (34, 34`) aufweisen, wobei die geraden Keilflächen (33, 33 `) zum Abstützen der Kabel (8, 9) dienen und die schrägen Keilflächen (34, 34`) der Angriffsglieder (11) derart miteinander in Wirkverbindung bringbar sind, dass beim Vor- oder Zurückfahren der Angriffsglieder (11) in Schliess- oder Öffnungsrichtung die schrägen Keilflächen (34, 34`) gegenseitig geführt sind.

11. Greifereinheit (1) nach einem der Ansprüche 1 bis 10, **dadurch gekennzeichnet, dass** das wenigstens eine Angriffsglied (11) aus einem Kunststoffmaterial mit einem geringen Reibungskoeffizienten besteht oder damit beschichtet ist.

12. Greifereinheit (1) nach einem der Ansprüche 1 bis 11, **dadurch gekennzeichnet, dass** die Backenelemente (4, 4'; 5, 5') vorzugsweise schlitzartige Aussparungen (17, 17') und Vorsprünge (18, 18') aufweisen, wobei die Aussparungen (17, 17') und Vorsprünge (18, 18') der einander zugewandten Backenelemente (4, 4'; 5, 5') wenigstens in einer Schliessstellung ineinander fahrbar sind und/oder dass die Greifereinheit (1) zwei einander zugewandte, gegenläufig bewegbare Keile (21, 22) als Angriffsglieder aufweist, wobei im Bereich der Keilspitzen der Keile (21, 22) jeweils vorzugsweise schlitzartige Aussparungen (27, 27') und Vorsprünge (28, 28') vorgesehen sind, die ineinander fahrbar sind.

13. Greifereinheit (1) nach Anspruch 12, **dadurch gekennzeichnet, dass** die Schlitzbreite (B) der Aussparungen (27, 27') gegenüber der Breite (b) der gegenüberliegenden, in diese eintauchenden Vorsprünge (28, 28') der jeweiligen Keile (21, 22) derart grösser dimensioniert ist, dass zum Erstellen eines Versatzes der Kabel (8, 9) die Keile (21, 22) in Längsrichtung (A) relativ zueinander bewegbar sind.

14. Bestückungsstation zum Bestücken von Steckergehäusen (20) mit konfektionierten Kabelenden mittels einer Greifereinheit (1) gemäss einem der Ansprüche 1 bis 13, mit welcher Kabelenden zweier Kabel (8, 9) eines insbesondere verdrillten Kabelstrangs (13) erfasst und die Kabelenden der beiden Kabel (8, 9) in Zellen eines Steckergehäuses (20) eingeführt werden können.

15. Verfahren zur Bestückung von Steckergehäusen (20) mit konfektionierten Kabelenden von zwei Kabeln (8, 9) eines verdrillten Kabelstrangs, vorzugsweise unter Verwendung der Bestückungsstation nach Anspruch 14, umfassend folgenden Schritte:
- Erfassen der Kabel (8, 9) mit einer Kabelgreifereinheit (1), wobei die Kabel (8, 9) aussen von Greiferbacken (2, 3) umschlossen werden und die Kabel (8, 9) von innen her durch wenigstens ein Angriffsglied (11) abstützend beaufschlagt werden, das zwischen die Kabel (8, 9) eingefahren wird,
- Einstellen des Abstands (H) zwischen den Kabeln (8, 9) durch Vor- oder Zurückfahren des wenigstens einen Angriffsglieds (11),
- Einführen der Kabelenden der Kabel (8, 9) mittels der Kabelgreifereinheit (1) in die gewünschten Zellen des Steckergehäuses (20), wobei der Abstand (H) zwischen den Kabeln (8, 9) aufrechterhalten wird.

## Claims

1. Gripper unit (1) for gripping and handling cable ends of two cables (8, 9) of an in particular twisted cable harness (13), having two gripper jaws (2, 3), at least one of the gripper jaws (2, 3) and preferably each gripper jaw (2, 3) comprising two jaw elements (4, 4'; 5, 5') arranged one above the other, the cables (8, 9) being able to be acted upon in a clamping manner from the outside by the jaw elements (4, 4'; 5, 5'),
**characterized in that** the gripper unit (1) comprises at least one activatable engagement member (11) with which at least one of the cables (8, 9) can be acted upon in a supporting manner from the inside, the engagement member (11) being arranged between the jaw elements (4, 4'; 5, 5') of one of the gripper jaws (2, 3).

2. Gripper unit (1) according to claim 1, **characterized in that** the at least one engagement member (11) can be moved independently of the gripper jaws (2, 3).

3. Gripper unit (1) according to either claim 1 or claim 2, **characterized in that** two engagement members (11) are provided, an engagement member (11) being associated with each gripper jaw (2, 3).

4. Gripper unit (1) according to any of claims 1 to 3, **characterized in that** a separate drive (30) is provided for the at least one engagement member (11).

5. Gripper unit (1) according to any of claims 1 to 4, **characterized in that** the jaw elements (4, 4'; 5, 5') are mounted in the gripper jaws (2, 3) so as to be movable in the closing or opening direction to a limited extent, as a result of which, when the engagement member (11) is inserted between the cables (8, 9) or when the engagement member (11) is retracted, the distance (H) between the cables (8, 9) can be varied.

6. Gripper unit (1) according to any of claims 1 to 5, **characterized in that** the at least one engagement member (11) is a wedge (21, 22) having at least one effective wedge surface (25, 25'; 26, 26').

7. Gripper unit (1) according to claim 6, **characterized in that** the wedge (21, 22) has two effective wedge surfaces (25, 25'; 26, 26'), the wedge angle (γ) of the wedge (21, 22) being between 30° and 90°, preferably between 45° and 70°, particularly preferably approximately 60°.

8. Gripper unit (1) according to either claim 6 or claim 7, **characterized in that** jaw elements (4, 4'; 5, 5') of the two gripper jaws (2, 3), which jaw elements face one another and form a pair, comprise clamping surfaces (23, 23'; 24, 24') for contact with the same cable (8, 9), the two clamping surfaces (23, 23'; 24, 24') enclosing an angle (α) which is smaller than the angle (β) between the wedge surfaces (25, 25'; 26, 26') of wedges (21, 22) which face one other and also form a pair, the angle (α) between the clamping surfaces (23, 23'; 24, 24') of the jaw elements (4, 4'; 5, 5') which face one another preferably being 90°, and the angle (β) between the wedge surfaces (25, 25'; 26, 26') of wedges (21, 22) which face one another preferably being 120°.

9. Gripper unit (1) according to claim 6, **characterized in that** two wedges (21, 22) which each have an oblique effective wedge surface (23, 23') and a straight wedge surface (32, 32') are provided, the wedges (21, 22) being slidably movable along one another on their straight wedge surfaces (32, 32').

10. Gripper unit (1) according to any of claims 1 to 6, **characterized in that** the gripper unit (1) has engagement members (11) which form a pair and which can be moved toward and away from one another, the engagement members (11) being wedge-shaped, the wedge-shaped engagement members (11) having straight wedge surfaces (33, 33') and oblique wedge surfaces (34, 34'), the straight wedge surfaces (33, 33`) being used to support the cables (8, 9), and the oblique wedge surfaces (34, 34`) of the engagement members (11) being able to be brought into operative connection with one another in such a way that the oblique wedge surfaces (34, 34`) are interdependently guided during the forward or backward movement of the engagement members (11) in the closing or opening direction.

11. Gripper unit (1) according to any of claims 1 to 10, **characterized in that** the at least one engagement member (11) consists of a plastics material having a low coefficient of friction or is coated therewith.

12. Gripper unit (1) according to any of claims 1 to 11, **characterized in that** the jaw elements (4, 4'; 5, 5') have preferably slot-like recesses (17, 17') and projections (18, 18'), the recesses (17, 17') and projections (18, 18') of the jaw elements which face one another (4, 4'; 5, 5') being movable into one another at least in a closed position, **and/or in that** the gripper unit (1) has two wedges (21, 22) which face one another and are movable in opposite directions as engagement members, preferably slot-like recesses (27, 27') and projections (28, 28') in each case being provided in the region of the wedge tips of the wedges (21, 22), which recesses and projections can be moved into one another.

13. Gripper unit (1) according to claim 12, **characterized in that** the slot width (B) of the recesses (27, 27') is greater than the width (b) of the opposing protrusions (28, 28') of the respective wedges (21, 22) that enter said recesses, such that the wedges (21, 22) can be moved relative to one another in a longitudinal direction (A) in order to create an offset of the cables (8, 9).

14. Fitting station for fitting plug housings (20) with pre-fabricated cable ends by means of a gripper unit (1) according to any of claims 1 to 13, by means of which gripper unit cable ends of two cables (8, 9) of an in particular twisted cable harness (13) can be gripped, and the cable ends of the two cables (8, 9) can be inserted into cells of a plug housing (20).

15. Method for fitting plug housings (20) with pre-fabricated cable ends of two cables (8, 9) of a twisted cable harness, preferably using the fitting station according to claim 14, comprising the following steps:
- gripping the cable (8, 9) by means of a cable gripper unit (1), wherein the cables (8, 9) are surrounded from the outside by gripper jaws (2, 3), and the cables (8, 9) are acted upon in a supporting manner from the inside by at least one engagement member (11), which is inserted between the cables (8, 9),
- adjusting the distance (H) between the cables (8, 9) by moving the at least one engagement member (11) forward or backward,
- inserting the cable ends of the cables (8, 9) into the desired cells of the plug housing (20) by means of the cable gripper unit (1), wherein the distance (H) between the cables (8, 9) is maintained.

## Revendications

1. Unité de préhension (1) permettant d'appréhender et de manipuler des extrémités de câble de deux câbles (8, 9) d'un faisceau de câbles en particulier torsadé (13) avec deux mâchoires de préhension (2, 3), dans laquelle au moins l'une des mâchoires de préhension (2, 3) et de préférence chaque mâchoire de préhension (2, 3) comprend deux éléments de mâchoire (4, 4' ; 5, 5') disposés l'un au-dessus de l'autre, dans laquelle les câbles (8, 9) peuvent être sollicités en les serrant de l'extérieur par les éléments de mâchoire (4, 4' ; 5, 5'),
**caractérisée en ce que** l'unité de préhension (1) comprend au moins un élément d'attaque (11) pouvant être activé, avec lequel au moins un des câbles (8, 9) peut être sollicité en le soutenant de l'intérieur, dans laquelle l'élément d'attaque (11) est disposé entre les éléments de mâchoire (4, 4' ; 5, 5') d'une des mâchoires de préhension (2, 3).

2. Unité de préhension (1) selon la revendication 1, **caractérisée en ce que** l'au moins un élément d'attaque (11) est mobile indépendamment des mâchoires de préhension (2, 3).

3. Unité de préhension (1) selon la revendication 1 ou 2, **caractérisée en ce que** deux éléments d'attaque (11) sont prévus, dans laquelle un élément d'attaque (11) est attribué à chaque mâchoire de préhension (2, 3).

4. Unité de préhension (1) selon l'une des revendications 1 à 3,
**caractérisée en ce que** pour l'au moins un élément d'attaque (11), un entraînement (30) propre est prévu.

5. Unité de préhension (1) selon l'une des revendications 1 à 4,
**caractérisée en ce que** les éléments de mâchoire (4, 4' ; 5, 5') sont montés dans la mâchoire de préhension (2, 3) de manière à pouvoir être déplacés de manière limitée dans la direction de fermeture ou d'ouverture, moyennant quoi lors de l'introduction de l'élément d'attaque (11) entre les câbles (8, 9) ou lors du retrait de l'élément d'attaque (11) la distance (H) entre les câbles (8, 9) peut être variée.

6. Unité de préhension (1) selon l'une des revendications 1 à 5,
**caractérisée en ce que** l'au moins un élément d'attaque (11) est un coin (21, 22) avec au moins une surface de coin (25, 25' ; 26, 26') efficace.

7. Unité de préhension (1) selon la revendication 6, **caractérisée en ce que** le coin (21, 22) présente deux surfaces de coin (25, 25' ; 26, 26') efficaces, dans laquelle l'angle de coin (γ) du coin (21, 22) est entre 30 ° et 90 ° et de préférence entre 45 ° et 70 ° et de manière particulièrement préférée est approximativement de 60 °.

8. Unité de préhension (1) selon la revendication 6 ou 7, **caractérisée en ce que** des éléments de mâchoire (4, 4' ; 5, 5') des deux mâchoires de préhension (2, 3) se faisant face et formant une paire présentent des surfaces de serrage (23, 23' ; 24, 24') pour le contact du même câble (8, 9), dans laquelle les deux surfaces de serrage (23, 23' ; 24, 24') forment un angle (α), qui est inférieur à l'angle (β) entre les surfaces de coin (25, 25' ; 26, 26') de coins (21, 22) se faisant face et formant également une paire, dans laquelle de préférence l'angle (α) entre les surfaces de serrage (23, 23' ; 24, 24') des éléments de mâchoire (4, 4' ; 5, 5') se faisant face est de 90 ° et l'angle (β) entre les surfaces de coin (25, 25' ; 26, 26') de coins (21, 22) se faisant face est de 120 °.

9. Unité de préhension (1) selon la revendication 6, **caractérisée en ce que** deux coins (21, 22) avec chacun une surface de coin (23, 23') efficace oblique et chaque une surface de coin (32, 32`) droite sont prévus, dans laquelle les coins (21, 22) peuvent être déplacés le long de leurs surfaces de coin (32, 32`) droites en glissant l'une contre l'autre.

10. Unité de préhension (1) selon l'une des revendications 1 à 6, **caractérisée en ce que** l'unité de préhension (1) présente des éléments d'attaque (11) formant une paire pouvant être rapprochés et éloignés l'un de l'autre, dans laquelle les éléments d'attaque (11) sont conçus en forme de coin, dans laquelle les éléments d'attaque (11) en forme de coin présentent des surfaces de coin (33, 33`) droites et des surfaces de coin (34, 34`) obliques, dans laquelle le surfaces de coin (33, 33') droites servent à soutenir les câbles (8, 9) et les surfaces de coin (34, 34`) obliques des éléments d'attaque (11) peuvent être amenées en liaison efficace l'une avec l'autre, de telle sorte que lors de l'avance ou du recul des éléments d'attaque (11) dans la direction de fermeture ou d'ouverture, les surfaces de coin (34, 34`) obliques sont guidées mutuellement.

11. Unité de préhension (1) selon l'une des revendications 1 à 10,
**caractérisée en ce que** l'au moins un élément d'attaque (11) est constitué d'un matériau synthétique avec un coefficient de friction faible ou en est revêtu.

12. Unité de préhension (1) selon l'une des revendications 1 à 11,
**caractérisée en ce que** les éléments de mâchoire (4, 4' ; 5, 5') présentent de préférence des évidements (17, 17') et des saillies (18, 18') en forme de fentes, dans laquelle les évidements (17, 17') et saillies (18, 18') des éléments de mâchoire (4, 4' ; 5, 5') se faisant face peuvent être déplacés les uns dans les autres au moins dans une position de fermeture **et/ou que** l'unité de préhension (1) présente deux coins (21, 22) se faisant face et mobiles en sens inverse en tant qu'éléments d'attaque, dans laquelle, dans la zone des pointes de coin des coins (21, 22) des évidements (27, 27') et des saillies (28, 28') de préférence en forme de fentes sont prévus, qui peuvent être déplacés les uns dans les autres.

13. Unité de préhension (1) selon la revendication 12, **caractérisée en ce que** la largeur de fente (B) des évidements (27, 27') est dimensionnée plus grande par rapport à la largeur (b) des saillies (28, 28') opposées s'enfonçant dans ceux-ci des coins (21, 22) respectif, de telle sorte que pour la création d'un décalage des câbles (8, 9) les coins (21, 22) peuvent être déplacés l'un par rapport à l'autre dans la direction longitudinale (A).

14. Poste d'équipement destiné à équiper des boîtiers de prise (20) avec des extrémités de câbles confectionnées au moyen d'une unité de préhension (1) selon l'une des revendications 1 à 13, avec laquelle les extrémités de câble de deux câbles (8, 9) d'un faisceau de câbles (13) en particulier torsadé peuvent être saisies et les extrémités de câble des deux câbles (8, 9) peuvent être introduites dans des cellules d'un boîtier de prise (20).

15. Procédé pour l'équipement de boîtiers de prise (20) avec des extrémités de câble confectionnées de deux câbles (8, 9) d'un faisceau de câbles torsadé, de préférence en utilisant le poste d'équipement selon la revendication 14, comprenant les étapes suivantes :
- saisie des câbles (8, 9) avec une unité de préhension (1), dans lequel les câbles (8, 9) sont entourés à l'extérieur par des mâchoires de préhension (2, 3) et les câbles (8, 9) sont sollicités en les soutenant de l'intérieur par au moins un élément d'attaque (11), qui est introduit entre les câbles (8, 9),
- réglage de la distance (H) entre les câbles (8, 9) par l'avance ou le recul de l'au moins un élément d'attaque (11),
- introduction des extrémités de câble des câbles (8, 9) au moyen de l'unité de préhension de câble (1) dans les cellules souhaitées du boîtier de prise (20), dans lequel la distance (H) entre les câbles (8, 9) est maintenue.
